# FASCICULE DE BREVET EUROPEEN

(11) **EP 1 835 132 B1**
(45) Date de publication et mention de la délivrance du brevet: **21.09.2011**
(21) Numéro de dépôt: 07290258.8
(22) Date de dépôt: 01.03.2007
(51) Int. Cl.: F01D 25/16, F01D 9/06, F02C 7/20, F01D 25/28

(54) **Habillage de carter dans un turboréacteur**
Gehäuseverkleidung in einem Turbinentriebwerk
Covering of a casing in a jet engine

(30) Priorité: 17.03.2006 FR 0602353
(43) Date de publication de la demande: 19.09.2007
(73) Titulaire: SNECMA, 75015 Paris (FR)
(72) Inventeur: Cameriano, Laurent Bernard, 77210 Avon (FR); Duval, Sylvain, 77220 Tournan en Brie (FR); Masson, Eric, 77590 Bois le Roi (FR); Plisson, Hervé Bernard, 77000 Vaux le Penil (FR)
(74) Mandataire: Ramey, Daniel

(56) Documents cités:
- GB-A- 2 226 600
- US-A- 4 979 872
- US-A- 5 597 286

## Description

La présente invention concerne un habillage de carter tel qu'un carter d'échappement dans un turboréacteur, cet habillage comprenant deux viroles coaxiales disposées l'une à l'intérieur de l'autre et réunies fixement par des chemises radiales à l'intérieur desquelles s'étendent des bras radiaux du carter.

Ce type d'habillage est monté autour d'un support de palier du turboréacteur et protège thermiquement le carter d'échappement du flux de gaz chaud provenant de la chambre de combustion et de la turbine du turboréacteur et qui s'écoule entre les viroles de l'habillage (voir par exemple le document GB-A-2 226 600).

L'habillage est fixé par des boulons à son extrémité aval sur une bride du support de palier et est au repos en appui à son extrémité amont sur le carter de façon à pouvoir se dilater librement sous l'effet de l'élévation de température pendant le fonctionnement du turboréacteur.

Toutefois, la dilatation thermique de l'habillage, supérieure à celle du carter, supprime l'appui de l'extrémité amont de l'habillage sur le carter au moins pendant les phases transitoires entre le régime de ralenti et le fonctionnement plein gaz du turboréacteur. L'habillage est alors monté en porte-à-faux sur le support de palier par son extrémité aval, et est soumis à des contraintes vibratoires importantes susceptibles d'entraîner l'apparition de fissures ou criques.

Une solution à ce problème consisterait à modifier la géométrie de l'habillage et/ou à le renforcer au moyen de raidisseurs. Cependant cette solution n'est pas satisfaisante car elle est coûteuse et entraîne une augmentation de la masse de l'habillage ce qui est un inconvénient dans l'industrie aéronautique.

L'invention a notamment pour but d'apporter une solution simple, efficace et économique à ces problèmes.

Elle propose à cet effet un habillage de carter dans un turboréacteur, comprenant deux viroles coaxiales disposées l'une à l'intérieur de l'autre et réunies fixement par des chemises radiales à l'intérieur desquelles s'étendent des bras radiaux du carter, l'habillage étant fixé à son extrémité aval sur un élément du carter et étant en appui axial à son extrémité amont sur un autre élément du carter, caractérisé en ce que l'habillage a, à l'état libre, une dimension axiale inférieure à la distance axiale entre les points de fixation de son extrémité aval et les points d'appui axial de son extrémité amont sur le carter et est mis en tension axiale quand il est monté et fixé sur le carter.

La mise en tension axiale de l'habillage lorsqu'il est monté sur le carter, permet de compenser l'écart entre sa dilatation thermique axiale et celle du carter, pour maintenir son extrémité amont en appui axial sur le carter pendant le fonctionnement du turboréacteur, ce qui évite que l'habillage ne soit soumis à des contraintes vibratoires importantes.

Selon une caractéristique de l'invention, la différence entre la dimension axiale de l'habillage, à l'état libre, et la distance axiale entre les points de fixation de son extrémité aval et les points d'appui axial de son extrémité amont, est sensiblement égale à la valeur maximale de l'écart entre la dilatation thermique axiale de l'habillage et celle du carter, pendant le fonctionnement du turboréacteur. Ainsi, l'extrémité amont de l'habillage reste toujours en appui axial ou radial sur le carter quel que soit le régime de fonctionnement du turboréacteur, ce qui est suffisant pour éviter l'apparition de contraintes vibratoires dans l'habillage.

Cette différence est par exemple d'environ 1 à 1,2 millimètres environ, dans un mode de réalisation particulier.

L'habillage est par exemple fixé par des boulons à son extrémité aval sur une bride de support de palier et comporte à son extrémité amont un rebord radial orienté vers l'extérieur, ce rebord radial se trouvant à l'intérieur et en amont d'un rebord radial formé à l'extrémité amont d'un élément cylindrique du carter, le rebord radial de l'extrémité amont de l'habillage venant en appui axial sur le rebord radial de l'élément du carter au montage de l'habillage sur le carter.

Le rebord radial de l'habillage est avantageusement formé sur une virole extérieure de l'habillage, qui par dilatation thermique peut venir en appui radial sur l'élément de carter pendant le fonctionnement du turboréacteur, ce qui permet de maintenir l'extrémité amont de l'habillage en appui axial et/ou radial sur le carter.

Lorsque l'habillage a atteint sa dilatation thermique axiale maximale par rapport à celle du carter, le rebord radial de l'habillage affleure le rebord radial du carter et la virole de l'habillage est en appui radial sur l'élément de carter. L'extrémité amont de l'habillage reste ainsi toujours en appui sur le carter quel que soit le régime de fonctionnement du turboréacteur.

L'invention concerne également un turboréacteur, caractérisé en ce qu'il comprend au moins un habillage de carter, en particulier un carter d'échappement, tel que décrit ci-dessus.

L'invention sera mieux comprise et d'autres détails, caractéristiques et avantages de la présente invention apparaîtront à la lecture de la description suivante faite à titre d'exemple non limitatif et en référence aux dessins annexés dans lesquels :
- la figure 1 est une demi vue schématique en coupe axiale d'un habillage de carter d'échappement selon l'invention ;
- la figure 2 est une vue à plus grande échelle des moyens de fixation de l'habillage de la figure 1 ;
- la figure 3 est une vue à plus grande échelle des moyens d'appui axial de l'habillage de la figure 1.

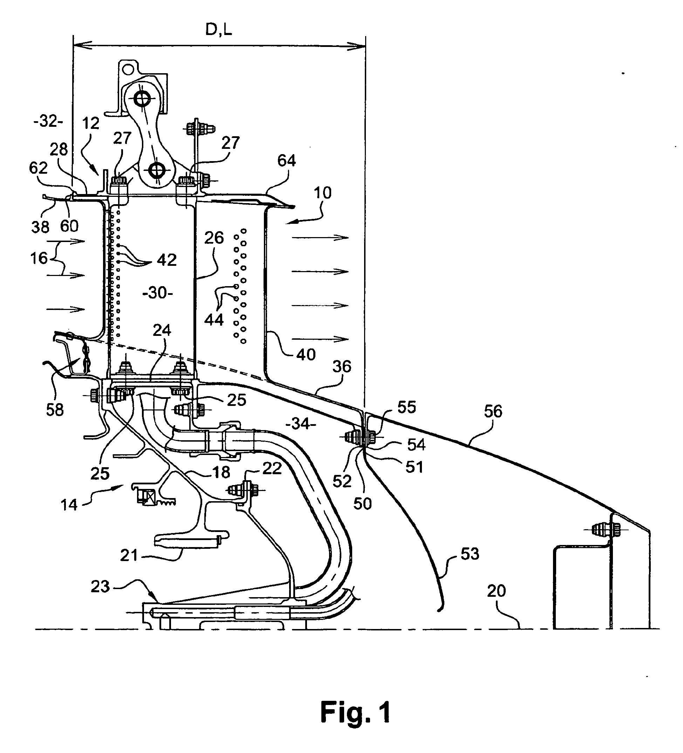

On a représenté en figure 1 un habillage 10 d'un carter d'échappement 12 de turboréacteur qui est monté autour d'un support de palier 14 et qui permet de protéger thermiquement le carter 12 d'un flux de gaz chaud 16 provenant de la chambre de combustion et de la turbine (non représentées) du turboréacteur.

Le support de palier 14 comprend une paroi 18 sensiblement tronconique s'étendant en aval vers l'axe 20 du turboréacteur et portant une bague extérieure 21 d'un palier (non représenté) de centrage et de guidage d'un arbre du turboréacteur. La paroi 18 du support de palier comprend à son extrémité aval une bride 22 de fixation sur des moyens de lubrification 23 du palier et est reliée à son extrémité amont à une extrémité amont d'une paroi 24 sensiblement cylindrique.

Le carter d'échappement 12 comprend neuf bras radiaux 26 qui sont fixés par des boulons radiaux 25 à leurs extrémités internes sur la paroi cylindrique 24 du support de palier et par des boulons radiaux 27 à leurs extrémités externes sur un élément cylindrique 28 du carter.

Chaque bras radial 26 comporte une cavité interne 30 de circulation d'air de refroidissement provenant d'une enceinte d'alimentation 32, radialement externe à l'élément de carter 28, et évacué en partie dans une enceinte 34 radialement interne à la paroi 24 du support de palier, et délimitée par cette paroi 24 et la paroi tronconique 18 du support de palier.

L'habillage 10 est monobloc et comporte deux viroles coaxiales 36 et 38 qui s'étendent l'une à l'intérieur de l'autre et qui sont reliées par neuf chemises radiales 40 à l'intérieur desquelles s'étendent les bras radiaux 26. La virole interne 36 s'étend à l'extérieur et à distance de la paroi 24 du support de palier et la virole externe 38 s'étend à l'intérieur et à distance de l'élément de carter 28.

Chaque chemise 40 a une forme profilée axialement et le bras radial 26 s'étend à l'intérieur d'une partie amont de la chemise et à distance de celle-ci.

Le bras radial 26 comprend en amont des trous 42 débouchant vers la partie d'extrémité amont de la chemise 40 qui comprend elle-même en aval des trous 44 orientée vers l'aval et débouchant dans la veine d'écoulement du flux de gaz. L'air qui circule dans la cavité interne 30 du bras radial 26 est en partie évacué par les trous 42 et projeté sur la partie d'extrémité amont de la chemise pour son refroidissement. Cet air contourne ensuite le bras radial 26 dans la chemise 40 et est injecté dans le flux de gaz 16 à travers les trous 44.

En fonctionnement du turboréacteur, l'habillage 10 est exposé à de fortes températures pouvant atteindre 700 à 800°C environ et l'air qui circule dans les cavités 30 des bras radiaux 26 a une température de 300 à 400°C environ, ce qui entraîne des dilatations thermiques différentielles importantes entre l'habillage et le carter.

L'extrémité aval de l'habillage 10 est fixée sur le support de palier 14 et son extrémité amont est en appui sur l'élément 28 du carter pour que l'habillage conserve une liberté de dilation axiale en fonctionnement.

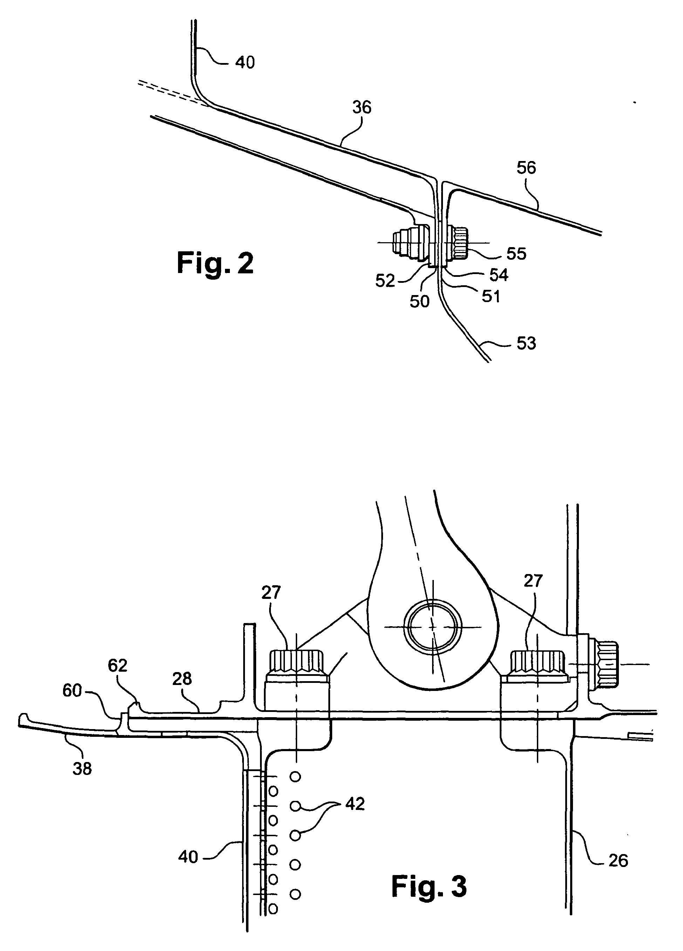

Dans l'exemple représenté, la virole interne 36 de l'habillage comprend à son extrémité aval une bride annulaire radialement interne 50 qui est serrée au moyen de boulons 55 entre une bride annulaire 52 de la paroi 24 du support de palier, située à l'amont, et les brides 51 d'un couvercle annulaire 53 et 54 d'un cône d'échappement 56 (figure 2), situées à l'aval, le cône d'échappement s'étendant vers l'aval et étant aligné avec la virole interne 36 de l'habillage.

L'extrémité amont de la virole interne 36 est fixée par rivetage à des moyens 58 élastiquement déformables portés par le support de palier 14 et autorisant des dilatations thermiques différentielles entre l'habillage et le support de palier.

La virole externe 38 de l'habillage comporte à proximité de son extrémité amont un rebord annulaire radialement externe 60 qui est en appui axial par sa face aval sur la face amont d'un rebord annulaire externe 62 formé à l'extrémité amont de l'élément de carter 28 (figure 3). La dimension radiale du rebord 60 est supérieure à la distance radiale entre la virole externe 38 et l'élément cylindrique 28.

L'extrémité aval de l'élément de carter 28 comprend des moyens 64 élastiquement déformables en appui radial sur l'extrémité aval de la virole externe 38 de l'habillage.

Dans la technique actuelle, l'habillage a à l'état libre une dimension axiale D située entre la face aval d'appui du rebord radial 60 de la virole externe et la face amont de la bride 50 destinée à être appliquée sur la bride 52 du support de palier, qui est égale à la distance axiale L entre la face aval de la bride 52 sur laquelle est appliquée la bride 50 et la face amont d'appui du rebord radial 62 de l'élément de carter 28.

En fonctionnement, l'habillage se dilate axialement et radialement et le rebord radial 60 de sa virole externe se déplace axialement vers l'amont par rapport à sa position à l'état libre, et n'est alors plus en appui axial sur le rebord radial 60 de l'élément de carter, ce qui peut provoquer des contraintes vibratoires importantes dans l'habillage et entraîner sa détérioration.

L'invention permet de résoudre ce problème grâce à un habillage dont la dimension axiale D précitée est inférieure à la distance axiale L ce qui amène à mettre l'habillage en tension axiale pour le monter sur le support de palier.

La différence entre la dimension axiale D et la distance axiale L est sensiblement égale à l'écart maximal entre la dilatation thermique axiale de l'habillage et celle du carter pendant le fonctionnement du turboréacteur. Lorsque la dilatation thermique axiale de l'habillage devient égale à cette différence, la face d'appui du rebord radial 60 affleure le rebord radial 62 de l'élément de carter, mais la dilatation thermique radiale de l'habillage est alors telle qu'il est en appui radial sur l'élément 28 du carter, ce qui est suffisant pour éviter l'apparition de contraintes vibratoires dans l'habillage.

La différence entre la dimension D et la distance L est de 1 à 1,2 millimètres environ dans un exemple de réalisation.

La distance radiale R entre la virole externe 38 et l'élément de carter 28 est avantageusement égale ou légèrement inférieure à la dilatation thermique radiale maximale de l'habillage pour que l'habillage soit maintenu en appui axial et/ou radial sur l'élément de carter en fonctionnement (figure 3).

Le montage de l'habillage 10 sur le carter d'échappement 12 est réalisable de la manière suivante, par exemple avec une disposition verticale des pièces : le carter étant placé en appui sur un support, on place un outillage en appui sur la partie amont du support de palier et on lui applique un effort dans l'axe du carter pour déplacer la position vers l'aval de la bride aval 50 de l'habillage sur une distance de 1 à 1,2 mm. En maintenant la position, on serre les vis 25 et 27 de fixation des bras sur la virole extérieure de carter et sur le support de palier.

## Revendications

1. Habillage de carter (10) dans un turboréacteur, comprenant deux viroles coaxiales (36, 38) disposées l'une à l'intérieur de l'autre et réunies fixement par des chemises radiales (40) à l'intérieur desquelles s'étendent des bras radiaux (26) du carter, l'habillage étant, en position de montage, fixé à son extrémité aval sur un élément du carter et en appui axial à son extrémité amont sur un autre élément du carter, **caractérisé en ce que** l'habillage a, à l'état libre, une dimension axiale (D) inférieure à la distance axiale (L) entre les points de fixation de son extrémité aval et les points d'appui axial de son extrémité amont sur le carter et est mis en tension axiale quand il est monté et fixé sur le carter.

2. Habillage de carter selon la revendication 1, **caractérisé en ce que** la différence entre la dimension axiale (D) de l'habillage (10), à l'état libre, et la distance axiale (L) entre les points de fixation de son extrémité aval et les points d'appui axial de son extrémité amont, est sensiblement égale à l'écart maximal entre la dilatation thermique axiale de l'habillage et celle du carter pendant le fonctionnement du turboréacteur.

3. Habillage de carter selon la revendication 2, **caractérisé en ce que** la différence est d'environ 1 à 1,2 millimètres.

4. Habillage de carter selon l'une des revendications précédentes, **caractérisé en ce que** l'habillage (10) est fixé par des boulons à son extrémité aval sur une bride (52) de support de palier (14) et comporte à son extrémité amont un rebord radial (60) orienté vers l'extérieur, ce rebord radial se trouvant à l'intérieur et en amont d'un rebord radial (62) formé à l'extrémité amont d'un élément (28) du carter, le rebord radial (60) de l'extrémité amont de l'habillage (10) venant en appui axial sur le rebord radial (62) de la virole de carter au montage de l'habillage sur le carter.

5. Habillage de carter selon la revendication 4, **caractérisé en ce que** le rebord radial (60) de l'extrémité amont de l'habillage (10) est formé sur une virole extérieure (38) de l'habillage, qui par dilatation thermique peut venir en appui radial sur l'élément de carter (28) pendant le fonctionnement du turboréacteur.

6. Turboréacteur, **caractérisé en ce qu'**il comprend au moins un habillage (10) d'un carter, en particulier d'un carter d'échappement (12), selon l'une des revendications précédentes.

## Claims

1. A casing cover (10) in a jet engine, comprising two coaxial shells (36, 38) arranged one inside the other and joined fixedly by radial envelopes (40) inside which extend radial arms (26) of the casing, the cover being in mounting position fastened at its downstream end to an element of the casing and bearing axially at its upstream end on another element of the casing, **characterized in that** the cover has, in the free state, an axial dimension (D) of less than the axial distance (L) between the points where its downstream end is fastened to the casing and the points where its upstream end bears axially on the casing, and is tensioned axially when it is mounted on and fastened to the casing.

2. The casing cover as claimed in claim 1, **characterized in that** the difference between the axial dimension (D) of the cover (10), in the free state, and the axial distance (L) between the points where its downstream end is fastened and the points where its upstream end bears axially is substantially equal to the maximum deviation between the axial thermal expansion of the cover and the axial thermal expansion of the casing during the operation of the jet engine.

3. The casing cover as claimed in claim 2, **characterized in that** the difference is approximately 1 to 1.2 millimeters.

4. The casing cover as claimed in one of the preceding claims, **characterized in that** the cover (10) is fastened at its downstream end to a flange (52) of a bearing support (14) by means of bolts and comprises, at its upstream end, an outwardly oriented radial lip (60), this radial lip being situated to the inside and upstream of a radial lip (62) formed at the upstream end of an element (28) of the casing, the radial lip (60) of the upstream end of the cover (10) bearing axially on the radial lip (62) of the casing shell when the cover is mounted on the casing.

5. The casing cover as claimed in claim 4, **characterized in that** the radial lip (60) of the upstream end of the cover (10) is formed on an outer shell (38) of the cover which, as a result of thermal expansion, can bear radially on the casing element (28) during the operation of the jet engine.

6. A jet engine which comprises at least one casing cover (10), in particular an exhaust casing cover (12), as claimed in one of the preceding claims.

## Patentansprüche

1. Gehäuseverkleidung (10) in einem Turbinenstrahltriebwerk, enthaltend zwei koaxial verlaufende Ringe (36, 38), die ineinanderliegend angeordnet und über radial verlaufende Mäntel (40) fest miteinander verbunden sind, innerhalb derer sich radiale Schenkel (26) des Gehäuses erstrecken, wobei die Verkleidung in Montagestellung mit ihrem hinteren Ende an einem Gehäuseteil befestigt ist und mit ihrem vorderen Ende an einem weiteren Gehäuseteil axial in Anlage ist, **dadurch gekennzeichnet, dass** die Verkleidung im freien Zustand eine axiale Abmessung (D) hat, die kleiner als der axiale Abstand (L) zwischen den Befestigungspunkten ihres hinteren Endes und den axialen Anlagepunkten ihres vorderen Endes am Gehäuse, und axial unter Spannung gesetzt wird, wenn sie an das Gehäuse montiert und befestigt wird.

2. Gehäuseverkleidung nach Anspruch 1, **dadurch gekennzeichnet, dass** die Differenz zwischen der axialen Abmessung (D) der Verkleidung (10) im freien Zustand und dem axialen Abstand (L) zwischen den Befestigungspunkten ihres hinteren Endes und den axialen Anlagepunkten ihres vorderen Endes im wesentlichen gleich der maximalen Abweichung zwischen der axialen Wärmedehnung der Verkleidung und der des Gehäuses während des Betriebs des Turbinenstrahltriebwerks ist.

3. Gehäuseverkleidung nach Anspruch 2, **dadurch gekennzeichnet, dass** die Differenz etwa 1 bis 1,2 mm beträgt.

4. Gehäuseverkleidung nach einem der vorangehenden Ansprüche, **dadurch gekennzeichnet, dass** die Verkleidung (10) mit ihrem hinteren Ende über Bolzen an einem Halteflansch (52) zum Haltern eines Lagers (14) befestigt ist und an ihrem vorderen Ende eine nach außen gerichtete, radial verlaufende Randleiste (60) aufweist, wobei diese radial verlaufende Randleiste sich innerhalb und vor einer radialen Randleiste (62) befindet, die am vorderen Ende eines Gehäuseteils (28) ausgebildet ist, wobei die radial verlaufende Randleiste (60) des vorderen Endes der Verkleidung (10) bei der Montage der Verkleidung an das Gehäuse axial in Anlage an die radial verlaufende Randleiste (62) des Gehäuserings gelangt.

5. Gehäuseverkleidung nach Anspruch 4, **dadurch gekennzeichnet, dass** die radial verlaufende Randleiste (60) des vorderen Endes der Verkleidung (10) an einem Außenring (38) der Verkleidung ausgebildet ist, der beim Betrieb des Turbostrahltriebwerks durch Wärmedehnung radial in Anlage an das Gehäuseteil (28) gelangen kann.

6. Turbostrahltriebwerk, **dadurch gekennzeichnet, dass** es zumindest eine Verkleidung (10) eines Gehäuses aufweist, insbesondere eines Austrittsgehäuses (12), nach einem der vorangehenden Ansprüche.
